# EUROPEAN PATENT APPLICATION

(11) **EP 4 736 623 A1**
(43) Date of publication of application: **06.05.2026**
(21) Application number: 25211065.5
(22) Date of filing: 24.10.2025
(51) Int. Cl.: A01D 34/00, A01D 34/71, A01D 34/81

(54) **MULCH PLUG FOR MOW DECK DISCHARGE CHUTE FOR HIGH EFFICIENCY WALK-BEHIND MOWING APPARATUS**

(30) Priority: 31.10.2024 US 202463714376 P
(71) Applicant: MTD Products Inc, Valley City, OH 44280-2711 (US)
(72) Inventor: ZEHENTBAUER, Daniel S., Valley City, 44280 (US); WERTENBERGER, Christopher M., Valley City, 44280 (US); HARRISON, Anthony A., Valley City, 44280 (US)
(74) Representative: SBD IPAdmin

(57) **Abstract**

A high efficiency turf maintenance apparatus having low power consumption, good cutting performance and a mulch plug for a mulching mode is presented herein. The mulch plug can sit conformally within a discharge opening in a mow deck of the high efficiency turf maintenance apparatus. The mulch plug can define multiple flow vanes, including a flow vane that directs material around an interior perimeter of the mow deck to recirculate the material within the mow deck and a flow vane that directs second material away from the interior perimeter and toward a surface on which the high efficiency turf maintenance apparatus rests. The mulch plug can be removed to allow vegetation clippings cut by a blade apparatus to be ejected from the mow deck through the discharge opening to facilitate a bagging or discharge mode of operation.

## Description

### FIELD OF DISCLOSURE

The disclosed subject matter pertains to an electric-powered walk-behind power equipment device with a mow deck and cutting system that enhances cutting efficiency and reduces power consumption for the power equipment device.

Manufacturers of power equipment for outdoor maintenance applications offer many types of machines for general maintenance and mowing applications. Generally, these machines can have a variety of forms depending on application, from general urban or suburban lawn maintenance, rural farm and field maintenance, to specialty applications. Even specialty applications can vary significantly. For example, mowing machines suitable for sporting events requiring moderately precise turf, such as soccer fields or baseball outfields may not be suitable for events requiring very high-precision surfaces such as golf course greens, tennis courts and the like.

Modern maintenance machines also offer multiple options for power source. The various advantages associated with electric motor engines, gasoline engines, natural gas engines, diesel engines and so forth also impact the mechanical design and engineering that go into these different maintenance devices. Meeting the various challenges associated with different maintenance and mowing applications and the benefits and limitations of different power sources results in a large variety of maintenance machines to meet consumer preferences.

### BRIEF SUMMARY

The following presents a simplified summary in order to provide a basic understanding of some aspects of the disclosure. This summary is not an extensive overview of the disclosure. It is not intended to identify key/critical elements or to delineate the scope of the disclosure. Its sole purpose is to present some concepts of the disclosure in a simplified form as a prelude to the more detailed description that is presented later.

According to various aspects of the disclosed embodiments herein, provided is a mulching plug for a mow deck of a walk-behind power equipment device. The mulching plug can seat conformally with a discharge opening in a mow deck of the walk-behind power equipment device, and can define a plurality of flow vanes at an interior surface of the mulching plug. The plurality of flow vanes can direct different portions of vegetation clippings within the mow deck toward different flow paths within an interior of the mow deck. A first flow path can direct clippings toward a surface underlying the mow deck (*e.g.,* a surface on which the walk-behind power equipment device rests) and away from a perimeter of the mow deck, and a second flow path can recirculate second clippings from an output edge of the mulch plug around the interior perimeter back toward the mulch plug at an input edge thereof.

In an embodiment of the present disclosure, there is provided a mulching plug for a mow deck of a walk-behind power equipment device. The mulching plug can comprise an interior surface, and an exterior surface that includes an operator insertion or extraction mechanism. Further, the mulching plug can comprise a surface edge that fits substantially conformal with a perimeter of a discharge opening in a mow deck of a mowing apparatus. The interior surface of the mulching plug is exposed to an interior of the mow deck. Moreover, the interior surface can define a first flow vane configured to direct material circulating within the interior of the mow deck of the mowing apparatus and received at an input of the first flow vane, along a first flow path within the interior of the mow deck. The interior surface can also define a second flow vane configured to direct second material circulating within the interior of the mow deck of the mowing apparatus and received at an input of the second flow vane, along a second flow path within the interior of the mow deck that is non-contiguous with the first flow path. In various aspects, the second flow path is configured to recirculate at least a portion of the second material around an interior perimeter of the mow deck to return to the input of the first flow vane or the input of the second flow vane, or both. In one or more additional aspects of the present disclosure, the interior surface can define greater than two flow vanes that direct respective material along respective (more than two) flow paths within the interior of the mow deck.

In further aspects of the disclosed embodiments, there is provided a walk-behind power equipment device. The walk-behind power equipment device can comprise a mow deck, further comprising: a front portion, a rear portion and a side portion of the mow deck, a plurality of frame mounts at the rear portion of the mow deck, a center portion defining an opening through a surface of the mow deck, a support ledge and one or more mounts and a discharge opening defining a second opening through the surface of the mow deck near a perimeter of the mow deck and between the rear portion and the side portion. The walk-behind power equipment device can further comprise a frame and a discharge body secured to the mow deck at least in part by way of the plurality of frame mounts at the rear portion of the mow deck, wherein the discharge body defines a discharge body input fluidly coupled to the discharge opening through the surface of the mow deck. Still further, the walk-behind power equipment device can comprise an electric motor supported at the support ledge of the center portion of the mow deck and powering a blade apparatus, wherein the electric motor and blade apparatus are secured to the one or more mounts and the blade apparatus includes a lift blade rotatable within an interior of the mow deck. Moreover, the walk-behind power equipment device can comprise a removable mulch plug seated within the discharge body and defining an interior surface edge seated substantially conformal to the discharge opening, the removable mulch plug defining a first flow vane configured to direct material toward a first flow path within the interior of the mow deck and a second flow vane configured to direct second material toward a second flow path within the interior of the mow deck that is physically separate from the material of the first flow path. Aspects of the disclosed embodiments can incorporate one or more flow vanes in addition to the first flow vane and the second flow vane defined by the removable mulch plug.

In an aspect of the invention, there is provided a mulching plug for a mow deck of a walk-behind power equipment device. The mulching plug comprises an interior surface, an exterior surface that includes an operator insertion or extraction mechanism, and a surface edge that fits substantially conformal with a perimeter of a discharge opening in a mow deck of a mowing apparatus. The interior surface of the mulching plug is exposed to an interior of the mow deck and defines: a first flow vane configured to direct material circulating within the interior of the mow deck of the mowing apparatus and received at an input of the first flow vane, along a first flow path within the interior of the mow deck; and a second flow vane configured to direct second material circulating within the interior of the mow deck of the mowing apparatus and received at an input of the second flow vane, along a second flow path within the interior of the mow deck that is non-contiguous with the first flow path. The second flow path is configured to recirculate at least a portion of the second material around an interior perimeter of the mow deck to return to the input of the first flow vane or the input of the second flow vane, or both.

The walk-behind power equipment device may comprise a discharge body adjacent to the mow deck. The discharge body may define: an intake opening in fluid communication with the discharge opening in the mow deck; an outtake; and a discharge chute connecting the intake opening to the outtake. The mulch plug may further comprise a discharge extension surface extending from an edge of the exterior surface and that fits conformally with a surface of the discharge chute and has a length dimension approximately equal to a depth of the discharge chute through the discharge body.

The mulch plug may further comprise a sleeve surface at an opposite end of the bottom surface from the exterior surface that seats upon a back surface of the discharge body and prevents the interior surface of the mulching plug from extending through the discharge opening in the mow deck.

The first flow vane may terminate in a kickdown element at an upper surface of the mow deck. The kickdown element may direct a portion of the material circulating within the interior of the mow deck downward from the upper surface of the mow deck toward an apparatus operating within the interior of the mow deck.

The interior surface may further define an input vane edge that separates the first flow vane from the second flow vane and physically separates the material directed along the first flow path by the first flow vane from the second material directed along the second flow path by the second flow vane.

The operator insertion or extraction mechanism may be an operator handle.

The walk-behind power equipment device may include a blade apparatus that comprises a lift blade having a wing element at an outer portion of the lift blade. The wing element may generate upward air flow within the interior of the mow deck in response to operation of the blade apparatus within the mow deck. The first flow path may direct the first material inward within the interior of the mow deck and away from a perimeter of the mow deck.

An approximate center of the first flow path may intersect the wing element of the lift blade. An approximate center of the first flow path may intersect the lift blade at a flat portion thereof not having the wing element.

In an aspect of the invention, there is provided a walk-behind power equipment device. The walk-behind power equipment device comprises a mow deck. The mow deck further comprises a front portion, a rear portion and a side portion of the mow deck; a plurality of frame mounts at the rear portion of the mow deck; a center portion defining an opening through a surface of the mow deck, a support ledge and one or more mounts; a discharge opening defining a second opening through the surface of the mow deck near a perimeter of the mow deck and between the rear portion and the side portion; a frame and a discharge body secured to the mow deck at least in part by way of the plurality of frame mounts at the rear portion of the mow deck, wherein the discharge body defines a discharge body input fluidly coupled to the discharge opening through the surface of the mow deck; an electric motor supported at the support ledge of the center portion of the mow deck and powering a blade apparatus, wherein the electric motor and blade apparatus are secured to the one or more mounts and the blade apparatus includes a lift blade rotatable within an interior of the mow deck; and a removable mulch plug seated within the discharge body and defining an interior surface edge seated substantially conformal to the discharge opening, the removable mulch plug defining a first flow vane configured to direct material toward a first flow path within the interior of the mow deck and a second flow vane configured to direct second material toward a second flow path within the interior of the mow deck that is physically separate from the material of the first flow path.

The first flow path may recirculate the material about an interior perimeter of the interior of the mow deck leaving the removable mulch plug at an exit edge thereof and directing the material toward an input edge thereof.

The second flow path may direct the second material away from a perimeter of the mow deck and downward toward a surface underlying the walk-behind power equipment device. The second flow path may further direct at least a portion of the second material inward toward a center of the mow deck and overlying a lift blade of the walk-behind power equipment device.

The lift blade may have a length extending from a tip of the lift blade to a center of rotation of the lift blade, and may comprise an airlift portion that extends from approximately the tip of the lift blade to about one half to about one fifth the length of the lift blade.

The second flow path may direct at least the portion of the second material over the airlift portion of the lift blade. The second flow path may direct at least the portion of the second material between the airlift portion and the center of rotation of the lift blade.

A vertical distance between a cutting edge of an upper blade of the blade apparatus and a lower edge of the first flow vane near an input edge of the removable mulch plug may be between about 0.375 inches (0.953 cm) and about 1.5 inches (3.8 cm).

A horizontal distance between an end of an upper blade of the blade apparatus and the second flow vane near an input edge of the removable mulch plug may be between about 0.15 inches (0.38 cm) and about 0.5 inches (1.27 cm).

The first flow vane may have a vertical height between about 1.0 inches (2.54 cm) and about 2.25 inches (5.72 cm) at an input edge of the removable mulch plug between a lower edge of the first flow vane and an upper edge of the first flow vane.

To accomplish the foregoing and related ends, certain illustrative aspects of the disclosure are described herein in connection with the following description and the drawings. These aspects are indicative, however, of but a few of the various ways in which the principles of the disclosure can be employed. Other advantages and features of the disclosure will become apparent from the following detailed description of the disclosure when considered in conjunction with the drawings.

### BRIEF DESCRIPTION OF THE DRAWINGS

Figure 1 shows an example high efficiency walk-behind outdoor maintenance apparatus according to one or more aspects of the present disclosure.
Figure 2 illustrates an underneath view of an example mow deck of a walk-behind mowing device according to further aspects of the disclosure.
Figure 3 depicts an underneath perspective view showing a mulch plug within a discharge chute of the example mow deck of Figure 2, in still further aspects.
Figure 4 illustrates a mow deck interior showing multiple flow paths guided by an interior surface of an example mulch plug in aspects of the disclosed embodiments.
Figure 5 depicts a mulch plug providing multiple flow paths directed by an alternate interior surface according to other aspects of the disclosed embodiments.
Figure 6 depicts a close-up view of the interior surface of a disclosed mulch plug and example flow paths for vegetation clippings within a mow deck, in a first embodiment.
Figure 6A illustrates a perspective close-up view of the interior surface of the mulch plug of Figure 6 and the example flow paths in the first embodiment.
Figure 7 shows a front view of a mow deck interior and mulch plug and orientation of a lift blade of a mowing device, in aspects of the disclosed embodiments.
Figure 8 illustrates three slices along a mulch plug representing different angles for side views of flow paths and interior surface contour at respective slices.
Figure 8A depicts a first side view slice showing flow paths and interior surface contour at an input side of the mulch plug, in an aspect(s) of the embodiments.
Figure 8B illustrates a second side view slice showing flow paths and interior surface contour near a midpoint of the mulch plug, in a further aspect(s).
Figure 8C depicts a third side view slide showing flow paths and interior surface contour at an exit side of the mulch plug, in further aspects of the disclosed embodiments.
Figure 9 depicts a diagram of an example mow deck interior with multiple flow paths for vegetation clippings according to a further embodiment of the present disclosure.
Figure 9A illustrates a bottom perspective view of the further embodiment of Figure 9.
Figure 10 illustrates a diagram of an example mow deck interior with multiple flow paths for vegetation clipping in an additional embodiment of the present disclosure.
Figure 10A depicts a bottom perspective view of the additional embodiment of Figure 10.
Figure 11 shows an interior surface of an example mulch plug having upper and lower flow vanes to direct multiple clipping flow paths in still further aspects.
Figure 12 illustrates an exterior surface of an example mulch plug.
Figure 13 illustrates the exterior surface of the example mulch plug positioned within a discharge chute of a discharge body of an example walk-behind mow deck.

It should be noted that the drawings are diagrammatic and not drawn to scale. Relative dimensions and proportions of parts of the figures have been shown exaggerated or reduced in size for the sake of clarity and convenience in the drawings. The same reference numbers may be used to refer to corresponding or similar features in the different embodiments, except where clear from context that same reference numbers refer to disparate features. Accordingly, the drawings and description are to be regarded as illustrative in nature and not as restrictive.

While embodiments of the disclosure pertaining to high efficiency work housing(s) and discharge components for power equipment machines are described herein, it should be understood that the disclosed machines, components, attachments and the like are not so limited and modifications may be made without departing from the scope of the present disclosure. The scope of the disclosed power equipment machines, components and attachments are defined by the appended claims, and all devices, processes, and methods that come within the meaning of the claims, either literally or by equivalence, are intended to be embraced therein.

### DETAILED DESCRIPTION

The following terms are used throughout the description, the definitions of which are provided herein to assist in understanding various aspects of the subject disclosure.

As used in this application, the terms "outdoor power equipment", "outdoor power equipment machine", "power equipment", "maintenance machine" and "power equipment machine" are used interchangeably and are intended to refer to any of robotic, partially robotic ride-on, walk-behind, sulky equipped, autonomous, semi-autonomous (*e.g*., user-assisted automation), remote control, or multi-function variants of any of the following: powered carts and wheel barrows, lawn mowers, lawn and garden tractors, lawn trimmers, lawn edgers, lawn and leaf blowers or sweepers, hedge trimmers, pruners, loppers, chainsaws, rakes, pole saws, tillers, cultivators, aerators, log splitters, post hole diggers, trenchers, stump grinders, snow throwers (or any other snow or ice cleaning or clearing implements), lawn, wood and leaf shredders and chippers, lawn and/or leaf vacuums, pressure washers, lawn equipment, garden equipment, driveway sprayers and spreaders, and sports field marking equipment.

As utilized herein, relative terms or terms of degree such as approximately, substantially or like relative terms such as about, roughly and so forth, are intended to incorporate ranges and variations about a qualified term reasonably encountered by one of ordinary skill in the art in fabricating or compiling the embodiments disclosed herein, where not explicitly specified otherwise. For instance, a relative term can refer to ranges of manufacturing tolerances associated with suitable manufacturing equipment (*e.g*., injection molding equipment, extrusion equipment, metal stamping equipment, and so forth) for realizing a mechanical structure from a disclosed illustration or description. In some embodiments, depending on context and the capabilities of one of ordinary skill in the art, relative terminology can refer to a variation in a disclosed value or characteristic, *e.g*., a 0 to five-percent variance or a zero to ten-percent variance from precise mathematically defined value or characteristic, or any suitable value or range there between can define a scope for a disclosed term of degree. As an example, a walk-behind mower 100 can have an interior dimension of a mow deck: such as a disclosed side wall angle of the mow deck with a variance of 0 to five-percent or 0 to ten-percent; a disclosed mechanical dimension can have a variance of suitable manufacturing tolerances as would be understood by one of ordinary skill in the art, or a variance of a few to several percent about the disclosed mechanical dimension that would also achieve a stated purpose or function of the disclosed mechanical dimension. These or similar variances can be applicable to other contexts in which a term of degree is utilized herein such as relative position of a disclosed element, speed of a disclosed motor in rotations per minute (or other suitable metric), accuracy of measurement of a physical effect (*e.g.,* a relative torque output, a relative electric power consumption, a relative motor speed, *etc*.) or the like.

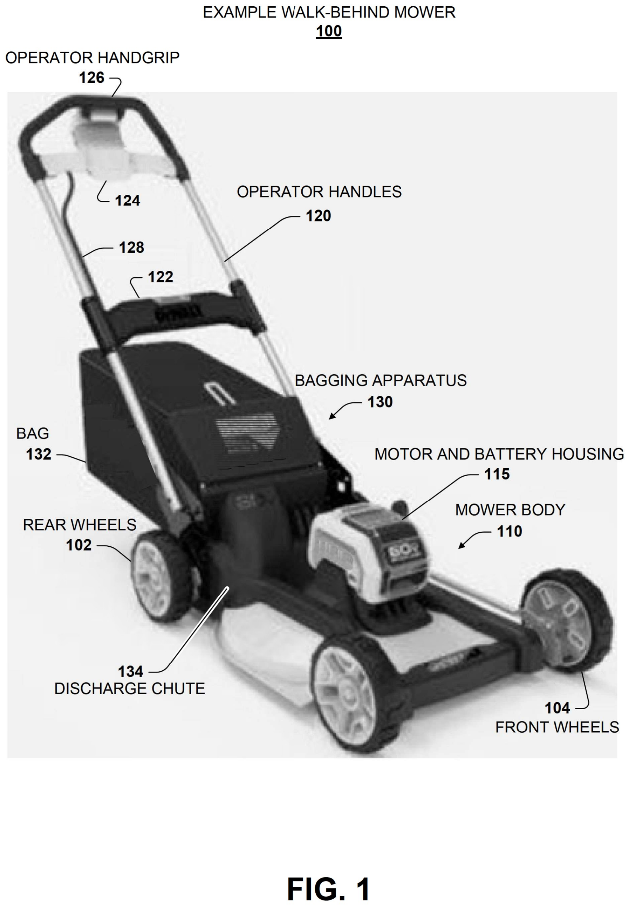

Figure 1 provides an image of an example walk-behind mower 100 according to aspects of the present disclosure. Walk-behind mower 100 can have a power source to drive an implement of walk-behind mower 100, and in some embodiments to drive rear wheels 102, front wheels 104 or both rear wheels 102 and front wheels 104 of walk-behind mower 100. The power source can be an electric motor according to various embodiments, although the subject disclosure is not so limited and in at least some disclosed embodiments a power source of walk-behind mower 100 can be a combustion engine such as a gasoline engine, a natural gas engine, or the like, or can be a hydraulic engine or motor, a pneumatic engine or motor, and so forth. In electric powered embodiments, a power source of walk-behind mower 100 can have one or more electric motors for driving a blade apparatus of walk-behind mower 100, and can optionally drive front wheels 104, rear wheels 102 or front and rear wheels 104, 102 to facilitate powered motion of walk-behind mower 100.

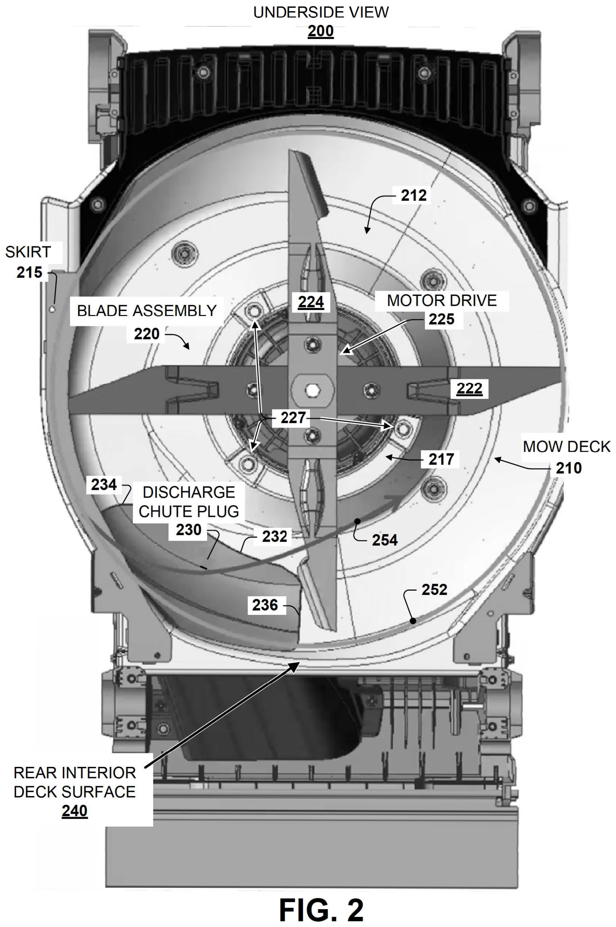

A mower body 110 including a motor and battery housing 115 can house the power source (*e.g.,* engine, motor, *etc*.), electric batteries in an electric powered lawnmower embodiment(s) and the blade apparatus. An underside of walk-behind mower 100 houses one or more blades for cutting vegetation under the mower body 110 (*e.g.,* see Figure 2, *infra*). Cuttings from the vegetation - also referred to herein as turf clippings, vegetation clippings, and so forth - can be discharged from mower body 110 through a discharge opening in mower body 110 and a discharge chute 134 coupled to mower body 110 (depicted on a rear, side of mower body 110 in the illustration of Figure 1, but can be located on different positions of mower body 110 in other embodiments of the present disclosure). In some embodiments, a bagging apparatus 130 can be coupled to the discharge opening to collect turf clippings in a container, such as bag 132. In other embodiments, the discharge opening can be closed to prevent discharge of turf clippings through the discharge opening (*e.g.,* see Figures 2 - 8, *infra,* among others). In these latter embodiments, referred to as a mulching operation mode, the turf clippings can be maintained within the underside of mower body 110 and cut multiple times by the blades into small pieces which can fall to the ground under the mower body 110, or be directed by a flow path within mower body 110 toward the ground.

Walk-behind mower 100 includes a set of operator handles 120 secured to mower body 110 at a first end of operator handles 120. In some embodiments of the present disclosure, operator handles 120 enable an operator to direct or push mower body 110 and front and rear wheels 102, 104, and in at least one embodiment can be collapsible and extendable to facilitate compact storage when not in use and efficient control over walk-behind mower 100 when in use, respectively. Operator handles 120 can be configured to lock in a fully collapsed position and to separately lock in a full extended position, in aspects of such embodiments.

Located at a second end of operator handles 120 is an operator handgrip 126. An operator presence control (OPC) bail cable can be provided and configured to control activation (and deactivation) of a power source of walk-behind mower 100. For instance, the OPC bail cable can be coupled to an electric switch that enables or disables electrical power to a power source of walk-behind mower 100 as one example of control over activation and deactivation of the power source. Other examples of activation/deactivation of a power source by an OPC device known in the art or reasonably conveyed to one of ordinary skill in the art by way of the context provided herein are considered to be within the scope of the present disclosure.

As is evident by Figure 1, walk-behind mower 100 is shown in a bagging operation mode having a bagging apparatus 130 coupled to mower body 110. Mower body 110 includes a mow deck having a discharge opening in a rear-right side orientation of the mow deck (viewed from an operator's perspective, above and behind rear wheels 102 of walk-behind mower 100). A discharge chute 132 of bagging apparatus 130 is fluidly coupled to the discharge opening of the mow deck and conveys turf clippings output from the discharge opening to a bag 132, where the turf clippings can be collected.

Motor and battery housing 115 provides a cover for an electric motor(s) secured to mower body 110, and optionally for a rechargeable battery(ies) providing electrical power to the electric motor(s). Operator handles 120 are shown in a fully extended position. An operator handgrip 126 is provided to facilitate operator-control over mower body 110 to move and direct walk-behind mower 100. A control cross-member 124 can include the OPC mechanism introduced previously to control activation/deactivation of the electric motor of walk-behind mower 100. A signal generated by the OPC mechanism can be conveyed via a connector 128 to a motor controller (not depicted) or to the electric motor to implement the activation/deactivation of the electric motor, in response to a state or condition of the OPC mechanism. A support cross-member 122 can facilitate collapse of an upper portion of operator handles 120 into a lower portion thereof, and *vice versa,* in a collapsible embodiment. Support cross-member 122 can also provide enhanced structural support for operator handles 120.

Figure 2 illustrates an underside view 200 of a high efficiency (HE) mow deck 210 of a mower body of a walk-behind maintenance apparatus (*e.g*., walk-behind mower 100 of Figure 1, *supra*), according to further aspects of the present disclosure. HE mow deck 210 includes a central portion 212 that defines an opening through which a blade assembly 220 can be situated. The blade assembly 220 is coupled to a motor drive 225 of an electric motor (not depicted), and the electric motor and blade assembly 220 can be positioned on a support seat 217 formed within (or secured to) mow deck 210. A set of motor mounts 227 are provided (*e.g*., defined within support seat 217 in at least one aspect of the disclosed embodiments) to secure the electric motor and blade assembly 220 to support seat 217 and HE mow deck 210.

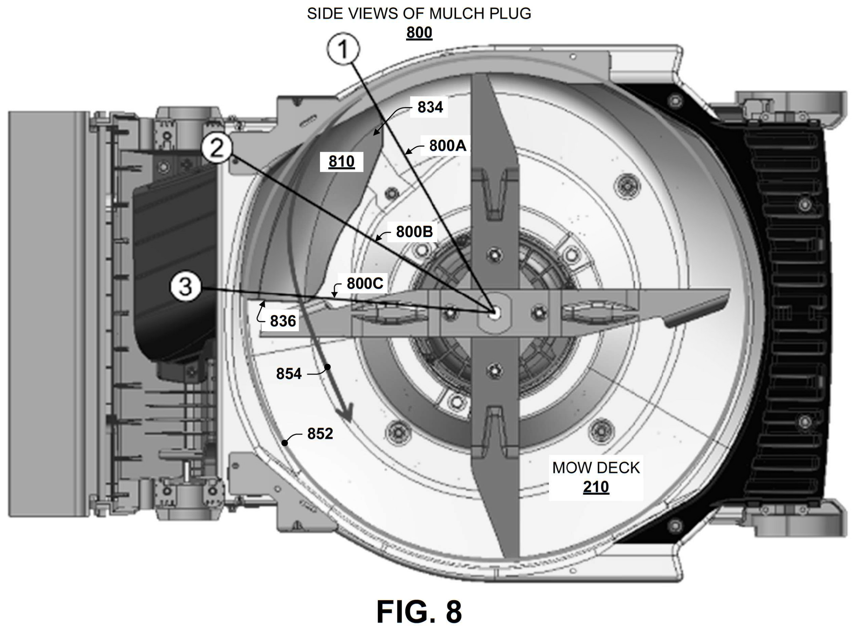

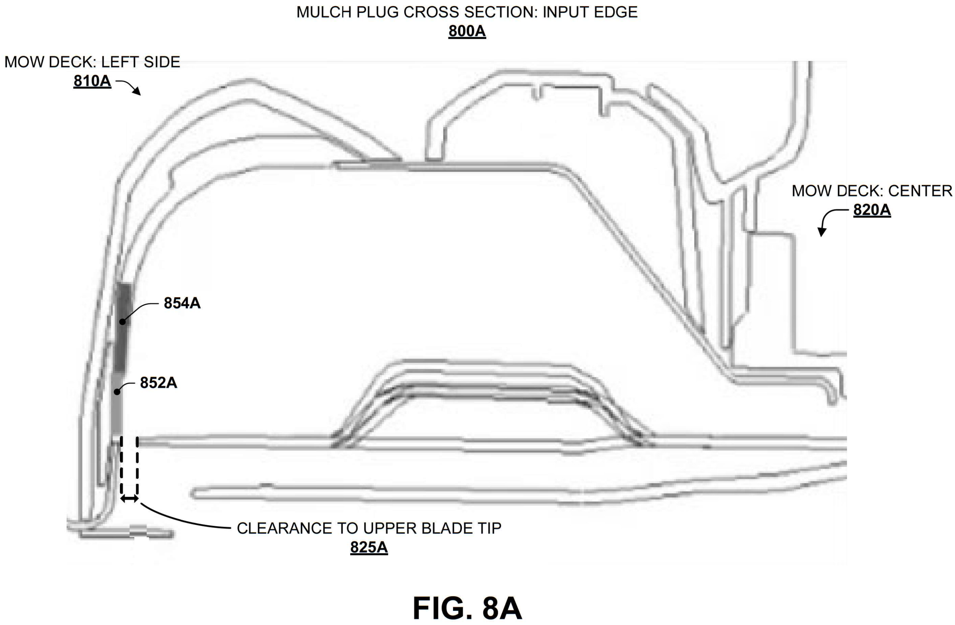

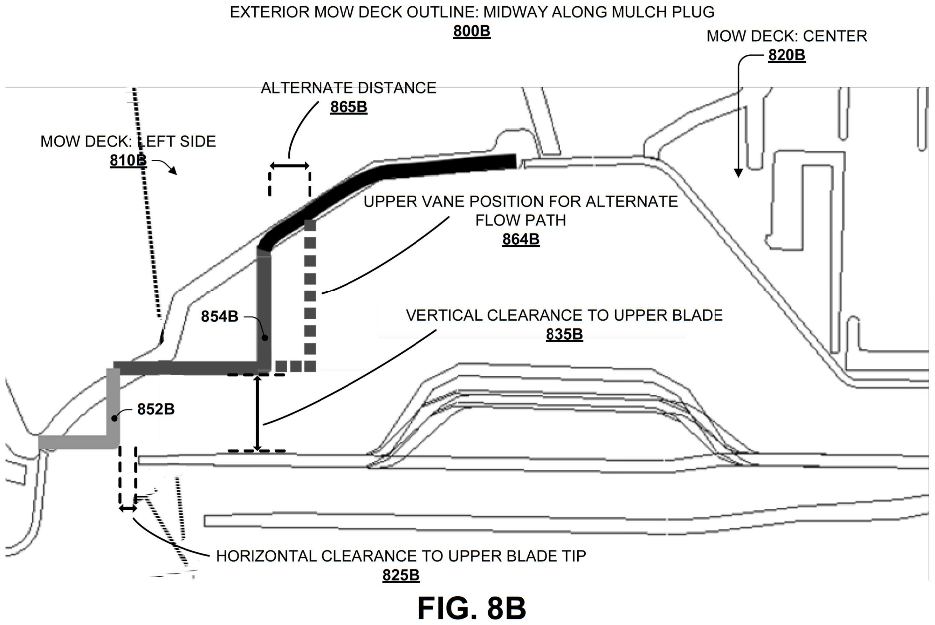

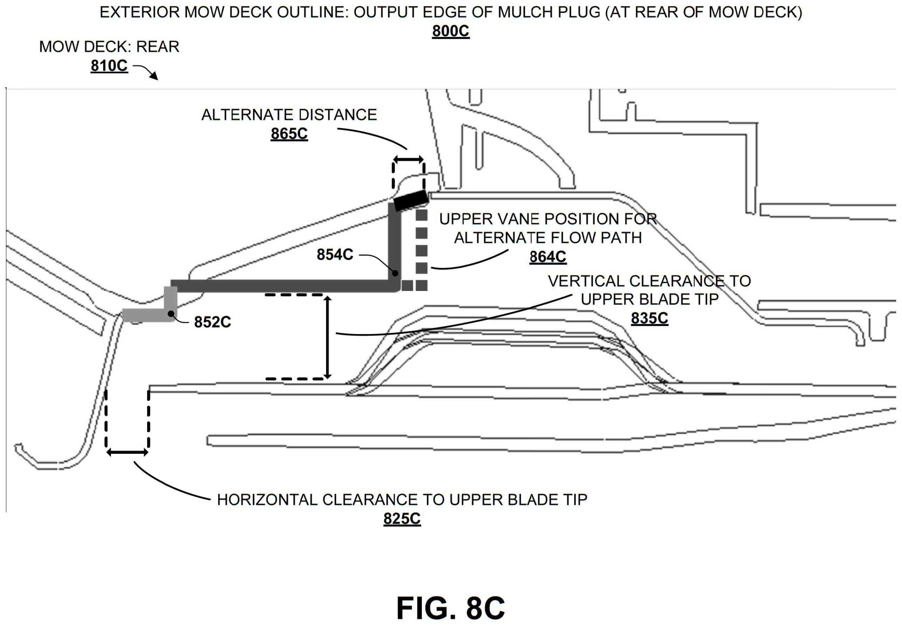

HE mow deck 210 defines a discharge opening 232 having a leading edge 234 furthest from a rear interior deck surface 240 and a trailing edge 236 nearest rear interior deck surface 240 (see also, *e.g.,* Figures 8A, 8B and 8C, *infra,* among others). In various aspects, leading edge 234 can be behind a horizontal centerline (or left-right centerline) through a center of HE mow deck 210 (*e.g*., approximately where blade 222 is positioned in Figure 2). In an alternative or additional further aspect(s), trailing edge 236 can be near or forward of a rear-most point on a perimeter of HE mow deck 210. The rear-most point of HE mow deck 210 can intersect a vertical centerline through the center of HE mow deck 210 (approximately where a lift blade 224 of blade apparatus 200 is positioned in Figure 2) from a front of HE mow deck 210 to a rear thereof at rear interior deck surface 240.

A discharge chute plug 230 can be positioned within discharge opening 232. A perimeter edge of discharge chute plug 230 can fit conformally to (or substantially conformal to) a perimeter opening of discharge opening 232. Moreover, discharge chute plug 230 can define multiple flow vanes to generate multiple flow paths of clipping material during operation of a walk-behind mower of the present disclosure. A first flow vane can produce a first flow path 252 of first clipping material as shown by the arrow and path defined by first flow path 252. A second flow vane can produce a second flow path 254 of second clipping material as shown by the arrow and path defined by second flow path 254. Discharge chute plug 230 can define one or more additional flow paths, though not specifically depicted in the illustration of Figure 2. In an embodiment, first flow path 252 can be a discharge flow path by which the first clipping material is ejected from mow deck 210 (*e.g.,* to a surface underlying HE mow deck 210, such as the ground or the like). In another embodiment, second flow path 254 can be a recirculation flow path by which the second clipping material can exit discharge chute plug 230 at trailing edge 236 and move about a perimeter of an interior surface of HE mow deck 210 toward leading edge 234 as shown by the arrow and path defined by second flow path 254.

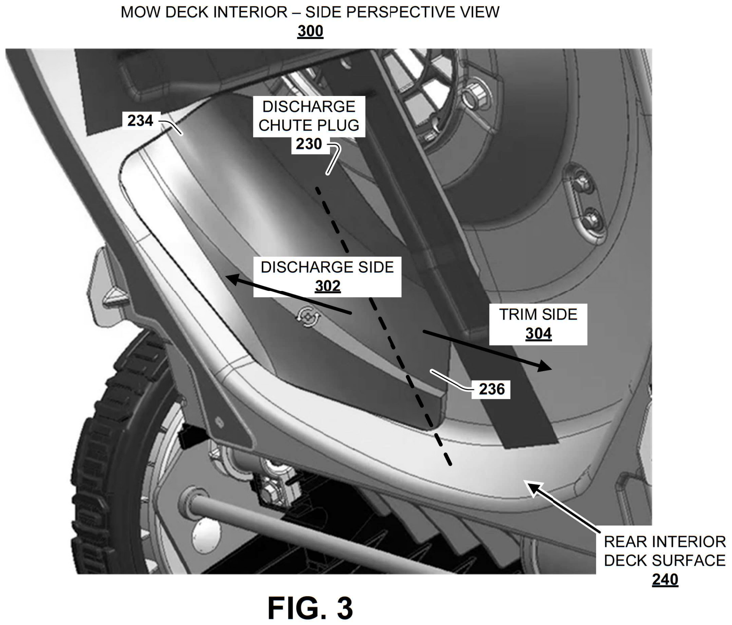

A deck skirt 215 can be provided on a discharge side of HE mow deck 210 (*e.g.,* see Figure 3, *infra*). Second clipping material moving along second flow path 254 can move along a top surface of deck skirt 215. As a result, deck skirt 215 can keep this second clipping material within HE mow deck 210 and mitigate or avoid the second clipping material from falling to the ground before reaching leading edge 234 of discharge chute plug 230 (at least along a length of deck skirt 215). Deck skirt 215 can therefore facilitate second clipping material reaching leading edge 234 and being directed by the first flow vane and the second flow vane as described above.

Figure 3 depicts a side perspective view 300 of the underside of HE mow deck 210, illustrating additional embodiments of the present disclosure. Side perspective view 300 defines a discharge side 302 of HE mow deck 210 and a trim side 304 of HE mow deck 210. Discharge chute plug 230 can be positioned on discharge side 302 as shown in Figure 2, including leading 234 and in at least some aspects of the disclosed embodiments, trailing edge 236 is also within discharge side 302 of HE mow deck 210. In at least some embodiments, trailing edge 236 can extend to trim side 304. References throughout this specification of discharge 302 and trim side 304 will continue the orientation depicted in side perspective view 300 of Figure 3.

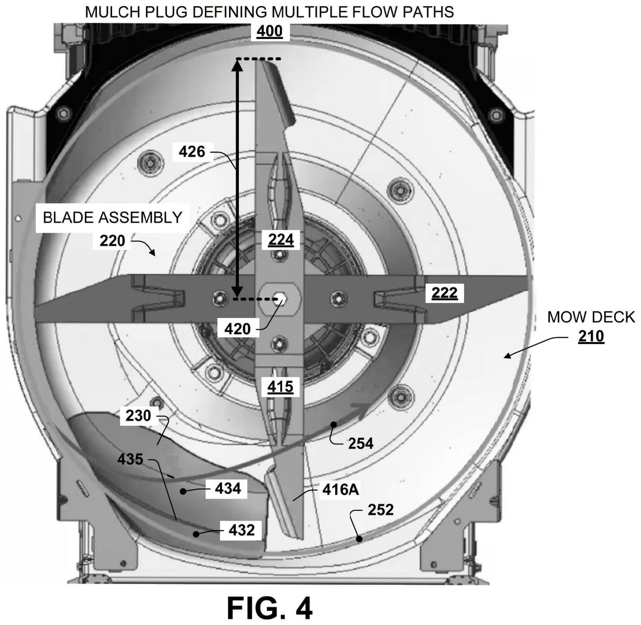

Figure 4 illustrates a drawing of an underside of HE mow deck 210 and a discharge chute plug 230 defining multiple flow paths 400, according to further embodiments of the present disclosure. HE mow deck 210 can include a blade assembly 220 having a flat blade 222 and a lift blade 224 defining an airlift portion 416A configured to generate upward airflow within HE mow deck 210 in response to rotation of blade apparatus 220. As shown by Figure 4, airlift portion 416A can extend along a portion of a length 426 of lift blade 224. In the example shown, airlift portion 416A can extend approximately from a tip (*e.g*., furthest from center of rotation 420) to a distance along length 426 of lift blade 224. The distance can be in a range from about one half to about one fifth of length 426 of lift blade 224, in various embodiments. In other embodiments, airlift portion 416A can be spaced away from the tip of lift blade 224 elsewhere along the length 426 of lift blade 224 (*e.g.,* near a middle of length 426 of lift blade 224, between center of rotation 420 and the middle of length 426, between the middle of length 426 and the tip of lift blade 224, or the like).

Discharge chute plug 230 has a perimeter edge that sits conformally with or substantially conformal with a discharge opening of HE mow deck 210. Moreover, discharge chute plug 230 defines an interior surface positioned within an interior of HE mow deck 210 that defines a first flow vane 432 and a second flow vane 434. In an embodiment, first flow vane 434 can be separated from second flow vane 434 by a vane edge 435. First flow vane 432 can receive first clipping material at an input edge of discharge chute plug 230 and direct the first clipping material along a first flow path 252 as shown by the associated arrow and path. As is evident, first flow path 254 can direct material primarily inside of airlift portion 416A on a flat portion 415 of lift blade 224 (*e.g*., where first flow path 254 intersects lift blade 224).

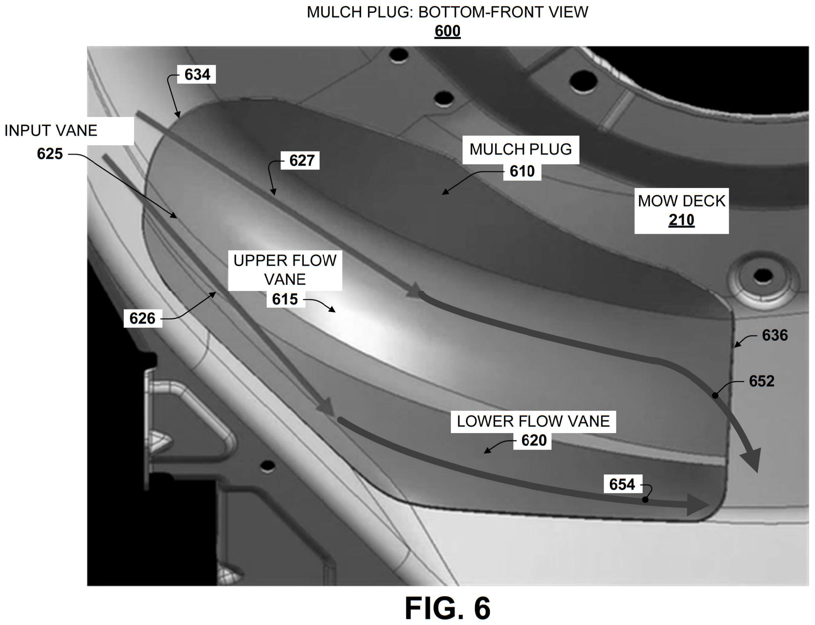

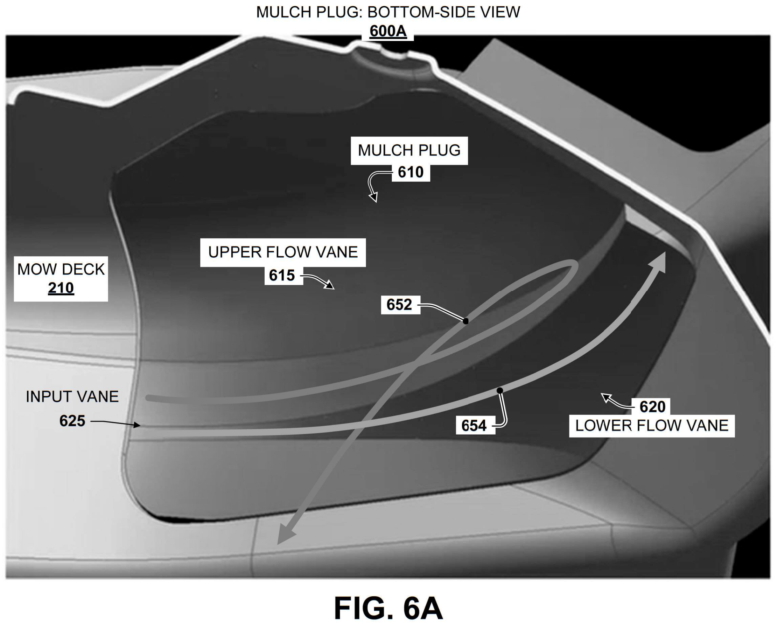

Second flow vane 434 can receive second clipping material at the input edge of discharge chute plug 230 and direct the second clipping material along a second low path 254 as shown by the associated arrow and path. Vane edge 435 can be configured to separate the first clipping material directed by the first flow vane 432 from the second clipping material directed by the second flow vane 434. In various embodiments, first flow path 252 can be a discharge flow path (*e.g.,* see Figure 6A, *infra*) directing clippings toward a surface under HE mow deck 210, and second flow path 254 can be a recirculation flow path directing the second clipping material around an interior surface of HE mow deck 210 toward the input edge of discharge chute plug 230. The combination of first flow vane 432 and second flow vane 434 can be configured to discharge most of the first and second clipping material as directed by first flow vane 432. The first clipping material is directed along first flow path 252 out of HE mow deck 210 and second clipping material is directed along second flow path 254 back to the input edge of discharge chute plug 230.

In addition to the foregoing, first flow path 254 can direct first clipping material into the rotation path of blade assembly 220. Accordingly, the first clipping material can be dispersed within HE mow deck 210 by mechanical motion of lift blade 224 or flat blade 222 or both. As a result, first flow path 254 and rotation of blade assembly 220 can achieve a spread of the first clipping material as the first clipping material contacting the rotating blades, is dispersed by that contact and distributed throughout the surface underlying HE mow deck 210. This distribution of clippings can mitigate or avoid clumping of vegetation clippings on the surface, *e.g*., promoting settling of the clippings down within turf being cut by blade assembly 220, to achieve good aesthetic appearance of the clipping material.

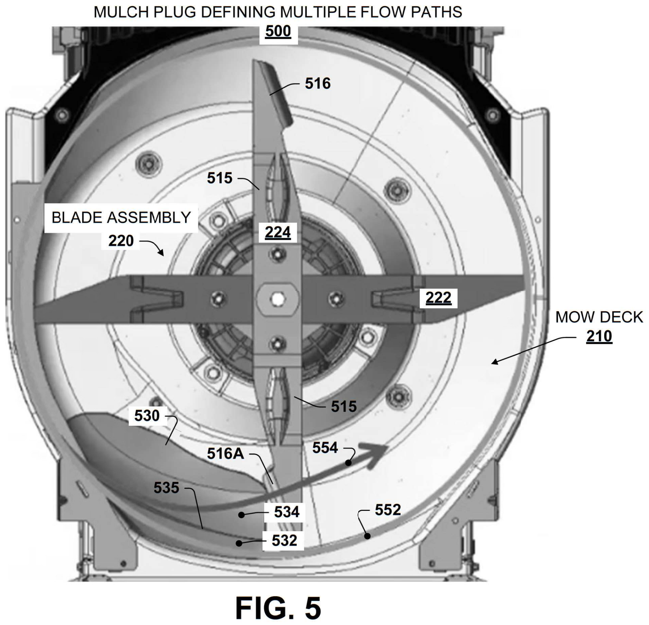

Figure 5 illustrates a discharge mulch plug 530 defining multiple flow paths 500 according to further embodiments of the present disclosure. Similar to discharge chute plug 230 of Figure 2, *supra,* discharge mulch plug 530 can have a perimeter edge that seats conformally with (or substantially conformally with) a discharge opening in HE mow deck 210. Discharge mulch plug 530 has an interior surface defining a first flow vane 532 separated from a second flow vane 534 by a vane edge 535. First flow vane 532 directs first clipping material toward a first flow path 552 and second flow vane 534 directs second clipping material toward a second flow path 554.

In the embodiment shown by multiple flow paths 500, first flow vane 532 and first flow path 552 can differ from first flow vane 432 and first flow path 252 of Figure 4, *supra.* For instance, whereas first flow vane 432 directs clippings along first flow path 252 primarily to a flat portion 415 of lift blade 224, first flow vane 532 can be configured to direct the first clipping material along a first flow path 552 that intersects an airlift portion 516A of lift blade 224 as shown in Figure 5. Interaction with airlift portion 516A of lift blade 224 can be configured to generate additional upward motion of the first clipping material within HE mow deck 210. The additional upward motion can serve to redirect the clippings to the upper interior surface of HE mow deck 210, and recirculate the clippings back toward discharge mulch plug 530 (see below).

Flow vane 534 can direct clippings along second flow path 554 as shown. In an embodiment, second flow path 554 can be similar or the same as second flow path 254. Thus, similar to that described above, second flow path 554 can be configured to direct second clipping material about an interior perimeter of HE mow deck 210 back to an input edge of discharge mulch plug 530. Second flow path 554 can be referred to as a recirculation flow path, according to this function. A portion of the redirected clipping material can then enter first flow vane 532 and be ejected out of HE mow deck 210 by way of first flow path 552, whereas a second portion may again be recirculated about second flow path 554 to the input edge of discharge mulch plug 530. In one or more embodiments, first flow vane 532 can be sized at the input edge of discharge mulch plug 530 to receive a larger percentage of turf clippings entering at the input edge (*e.g.,* see Figure 6, *infra*), and second flow vane 534 can be sized at the input edge to receive a smaller percentage of turf clippings entering at the input edge. By configuring second flow vane 534 to receive the smaller percentage of turf clippings, discharge mulch plug 530 can control an approximate proportion of turf clippings recirculating within HE mow deck 210 and an approximate proportion of turf clippings ejected from HE mow deck 210 to mitigate or avoid excess recirculation that leads to inadvertent dumping of turf clippings below the perimeter interior of HE mow deck 210 during the recirculation of second flow path 554, as one example.

Figure 6 depicts a closeup front view 600 of a mulch plug 610 according to alternative or additional embodiments of the present disclosure. In some embodiments, mulch plug 610 can have the characteristics described above for discharge chute plug 230 of Figure 2 (or Figure 4), whereas in other embodiments mulch plug 610 can have the characteristics described above for discharge mulch plug 530 of Figure 5. In yet other embodiments, mulch plug 610 can have a combination of characteristics of discharge chute plug 230 and discharge mulch plug 530 (*e.g.,* a first flow vane 432 having a first flow path 252, a second flow vane 434 having a second flow path 254 and a third flow vane having a third flow path embodied by first flow vane 532 adjacent first flow vane 432 and second flow vane 434, or an additional flow vane and flow path not explicitly depicted herein but reasonably conveyed to one of ordinary skill in the art by way of the context provided herein, which is considered within the scope of the present disclosure).

Mulch plug 610 defines an input edge 634 that receives turf clippings moving within an interior of HE mow deck 210 (*e.g.,* in response to rotation of a blade apparatus therein). An input vane(s) 625 can distribute a first portion 626 of the turf clippings to a lower flow vane 620 of mulch plug 610 and can distribute a second portion 627 of the turf clippings to an upper flow vane 615 of mulch plug 610. In various embodiments, a proportion of first portion 626 of the turf clippings to second portion 627 of the turf clippings can be determined at least in part by position of input vane 625 along input edge 634. For instance, a position of input vane 625 along input edge 634 can establish a first proportion of input edge 634 that receives and directs the first portion 626 of clippings to upper flow vane 615 and can establish a second proportion of input edge 634 that receives and directs the second portion 627 of clippings to lower flow vane 620. In an embodiment, the first proportion defining a first fraction of input edge 634 above input vane 625 directing clipping material to upper flow vane 615 can be about 70 percent of a length of input edge 634, and the second proportion defining a second fraction of input edge 634 below input vane 625 directing clipping material to lower flow vane 620 can be about 30 percent of the length of input edge 634. In other embodiments, the first proportion can be from about 65 percent to about 90 percent of the length of input edge 634 and the second proportion can be from about 35 percent to about 10 percent of the length of input edge 634, or any suitable value(s) or range(s) there between (*e.g.,* 75 and 25 percent, 85 and 15 percent, *etc*.; 70-90 percent and 30-10 percent; 75-85 percent and 25-15 percent, and so forth). In embodiments with multiple input vanes 625 and more than two flow vanes, positions of the multiple input vanes 625 can be located along input edge 634 to define respective proportions of input edge 634 associated with respective ones of the more than two flow vanes, as would be understood to one of ordinary skill in the art.

The interior surface of mulch plug 610 defining upper flow vane 615 and lower flow vane 620 directs respective clippings along a first flow path 652 and a second flow path 654. First flow path 652 can be directed inward and away from the interior surface of HE mow deck 210 and downward toward a surface underlying HE mow deck 210. In contrast, second flow path 654 can direct clipping material beyond exit edge 636 along an interior perimeter of HE mow deck 210 back toward input edge 634, as described herein. First flow path 652 and second flow path 654 can define one embodiment of a disclosed mulch plug (mulch plug 610 in this embodiment).

Figure 6A shows a closeup side view 600A of mulch plug 610 in the embodiment defined in Figure 6. Closeup side view 600A depicts first flow path 652 extending inward from an interior surface of HE mow deck 210, and downward toward an underlying surface. Second flow path 654 directing material around an interior perimeter of HE mow deck 210 is also shown in closeup side view 600A.

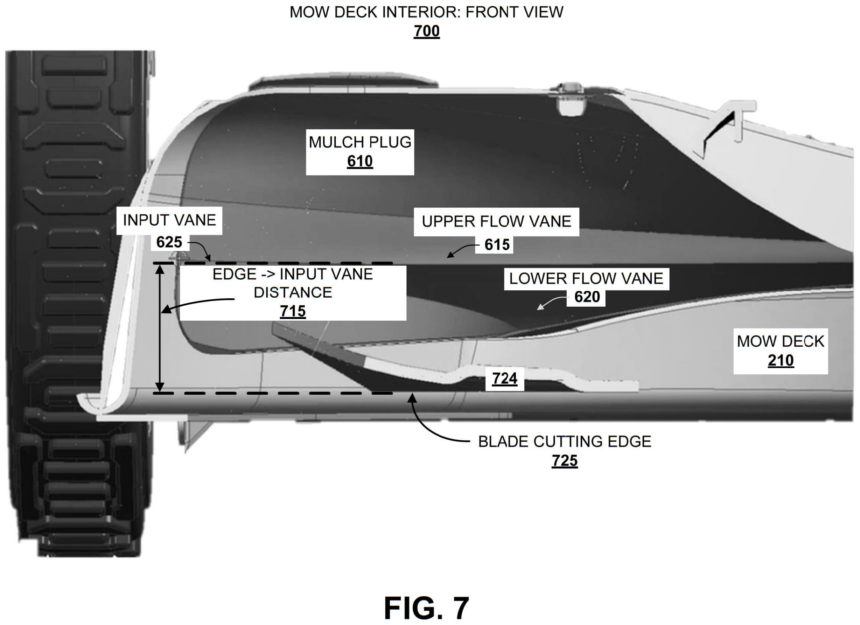

Figure 7 depicts a front view 700 of mulch plug 610 within an interior of a mow deck 210 of a walk-behind mowing machine, in further aspects of the disclosed embodiments. Front view 700 shows a lift blade 724 within an interior of HE mow deck 210. Front view 700 also depicts a distance 715 between a cutting edge 725 of lift blade 724 and an input vane 625 of mulch plug 610. Distance 715 can be about 0.5 inches (1.27 cm) in some aspects of the disclosed embodiments. In alternative or additional aspects, distance 715 can be within a range from about 0.375 inches (0.953 cm) and about 1.5 inches (3.81 cm), or any suitable value or range there between (*e.g.,* 0.4 - 1.4in (1.0-3.6 cm), 0.45 - 1.0in (1.14-2.54 cm), and so forth).

Figure 8 depicts a set of side views 800 of a disclosed mulch plug 810 at different intersections with a HE mow deck 210 according to alternative or additional embodiments of the present disclosure. A first view 800A is a cross-section of mulch plug 810 at input edge 834 thereof, a second view 800B is a cross-section of mulch plug 810 near a middle portion of the input edge, and a third view 800C is a cross-section of mulch plug 810 near exit edge 836 of mulch plug 810. The cross-sections show surfaces of mulch plug 810 directing turf clippings on a first flow path 854 and a second flow path 852 outward from exit edge 836.

Figure 8A illustrates a cross section 800A of a mow deck and mulch plug interior surface at an input edge 834 of a disclosed mulch plug 810, in various aspects of the disclosed embodiments. The mow deck can be HE mow deck 210 of Figure 2, and the mulch plug 810 can be mulch plug 610, discharge mulch plug 530, discharge chute plug 230, or the like, or a suitable combination of the foregoing.

Cross section 800A illustrates a cross-section of the mulch plug 810 (and HE mow deck 210) approximately where mulch plug 810 intersects with line 800A in Figure 8, *supra.* Mow deck center 820A and mow deck: left side 810A are indicated to show a relative orientation of the depicted cross-section 800A of HE mow deck 210 depicted in Figure 8A. Clearance to upper blade tip 825A shows a distance between an interior surface of HE mow deck 210 and an upper blade (*e.g.,* a lift blade 224) of a blade apparatus operably positioned within HE mow deck 210. Clearance to upper blade tip 825A can be about 0.34in in one or more aspects of the disclosed embodiments, whereas in other aspects of the disclosed embodiments, clearance to upper blade tip 825A can be about 0.15in to about 0.5in, or any suitable value or range there between.

Cross section 800A shows multiple flow vanes of mulch plug 810, including a first flow vane 854A and a second flow vane 852A. As is evident from Figure 8A, first flow vane 854A and second flow vane 852A are substantially flat and conformal to an interior surface of HE mow deck 810 adjacent to input edge 834 of mulch plug 810.

Referring to Figure 8B, a cross-section 800B is shown of the mow deck and mulch plug interior surface, between input edge 834 and exit edge 836. Cross sections of first flow vane 854B and second flow vane 852B are shown. Particularly, first flow vane 854B extends further into an interior of HE mow deck 210 than second flow vane 852B. A vertical clearance 835B from an upper blade to a bottom edge of first flow vane 854B is shown. In aspects of the disclosed embodiments, vertical clearance 835B can be a distance of about 1.18in. In further aspects, vertical clearance can be in a range from about 1.0 to about 2.25in, or any suitable value or range there between.

In further aspects of the disclosed embodiments, first flow vane 854B can correspond to first flow vane 534 of Figure 5, configured to direct turf clippings in a first flow path that intersects airlift portion 516A of a lift blade 224. An alternate upper vane position for alternate flow path 864B is also shown, which can correspond to first flow vane 234 of Figure 2, configured to direct turf clippings in an alternate first flow path 254 that primarily intersects a flat portion 415 of lift blade 224 as shown in Figure 4, *supra* (*e.g.,* that mitigates or avoids interaction of turf clippings with airlift portion 516A of lift blade 224). An example alternate distance 865B between first flow vane 854B and 864B is also evident from the illustration of Figure 8B.

Referring to Figure 8C, a cross-section 800C is shown of the mow deck and mulch plug interior surface, coincident with exit edge 836 and line 800C in Figure 8. Cross sections of first flow vane 854C and second flow vane 852C are shown as embodied at exit edge 836. Particularly, first flow vane 854C extends further into an interior of HE mow deck 210 than second flow vane 852C. A vertical clearance 835C from an upper blade to a bottom edge of first flow vane 854C is shown. In aspects of the disclosed embodiments, vertical clearance 835C can be substantially similar to that provided in Figure 8B, *supra,* though vertical clearance 835C can vary from vertical clearance 835B in other aspects (*e.g*., reflecting a change in bottom edge of first flow vane 854C from midway along mulch plug 810 to exit edge 836 of mulch plug 810). As suitable examples therefore, vertical clearance 835C can be a distance of about 1.18in. In further aspects, vertical clearance 835C can be in a range from about 1.0 to about 2.25in, or any suitable value or range there between.

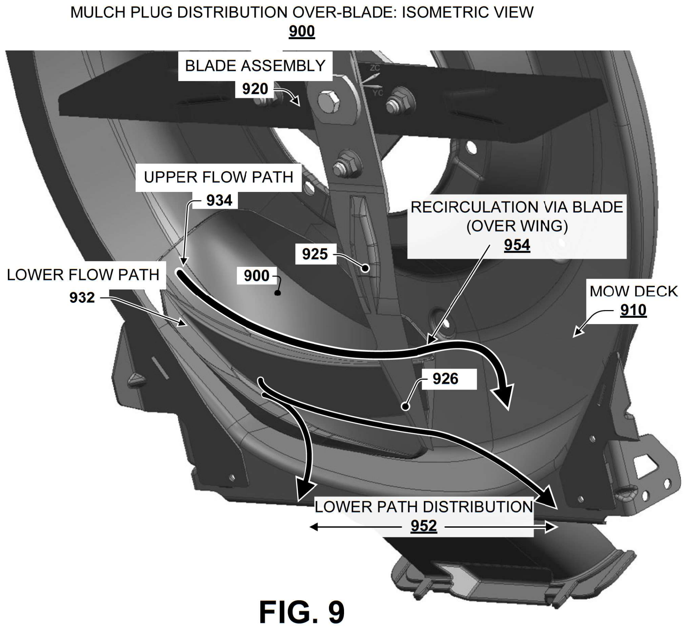

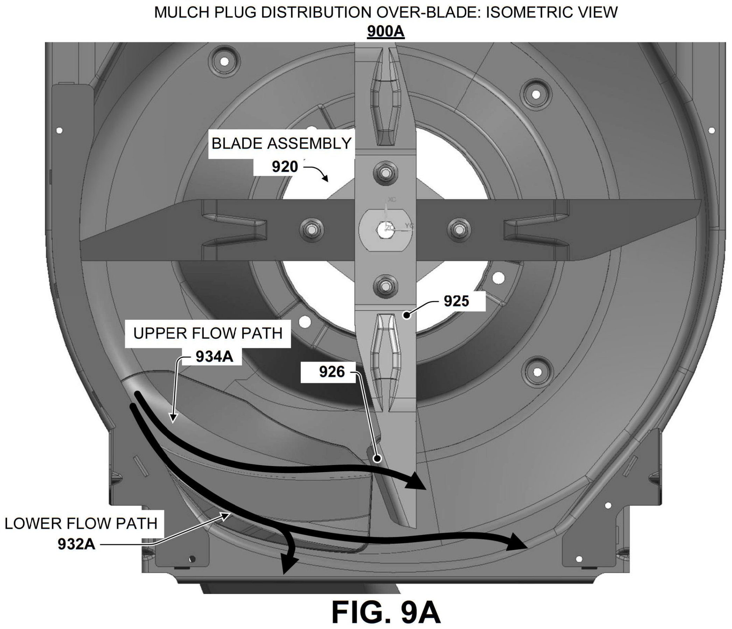

Figure 9 illustrates an example mulch plug 900 providing multiple flow paths for distributing clipping material within an interior of a mow deck, according to further aspects of the disclosed embodiments. Mulch plug 900 includes an upper flow path 934 and lower flow path 932, as depicted. First clipping material guided along lower flow path 932 can be distributed by lower flow path 932 throughout a rear surface of mow deck 910, as shown by the distribution range between the arrows of lower path distribution 952. Second clipping material guided along upper flow path 934 can be directed by upper flow path 934 into contact with a lift blade 925 of a blade assembly 920 to be driven upward within mow deck 910 to an upper surface thereof and recirculated about an interior of mow deck 910 back toward an input edge of mulch plug 900. This flow of second clipping material is depicted as recirculation via blade (over wing) 954 and the arrow associated with it. Moreover, recirculation via blade (over wing) 954 directs second clipping material over an airlift wing segment 926. Figure 9A shows a bottom perspective view 900A of mulch plug 900 with an arrow defining upper flow path 934A and separate arrows showing lower flow path 932A from the bottom perspective view. Bottom perspective view 900A shows upper flow path 934A as intersecting airlift wing segment 926 of lift blade 925.

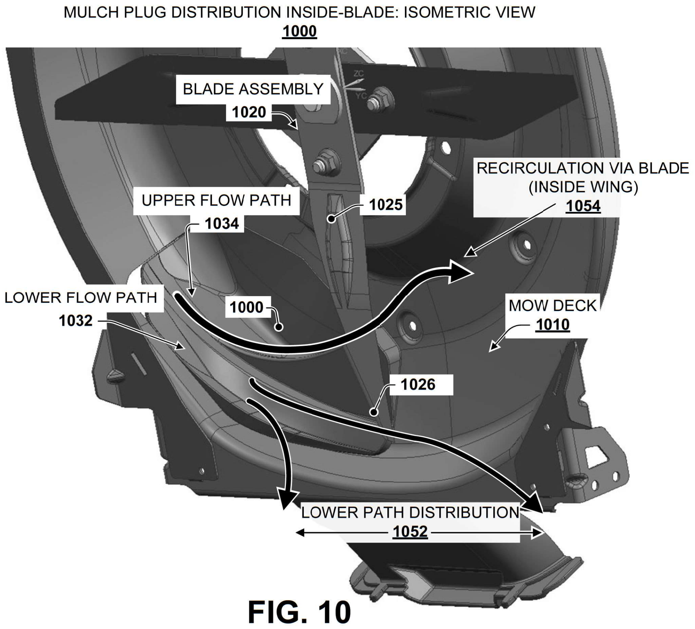

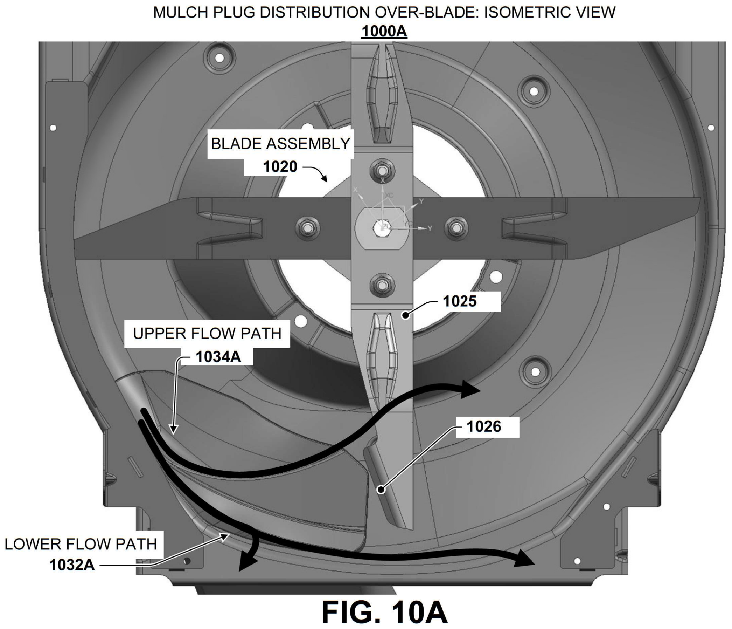

Figure 10 illustrates an example mulch plug 1000 providing multiple flow paths for distributing clipping material within an interior of a mow deck 1010, according to yet other aspects of the disclosed embodiments. Mulch plug 1000 includes an upper flow path 1034 and lower flow path 1032, as depicted. First clipping material guided along lower flow path 1032 can be distributed by lower flow path 1032 throughout a rear surface of mow deck 1010, as shown by the distribution range between the arrows of lower path distribution 1052. Second clipping material guided along upper flow path 1034 can be directed by upper flow path 1034 into contact with a lift blade 1025 of a blade assembly 1020 to be driven upward within mow deck 1010 to an upper surface thereof and recirculated about an interior of mow deck 1010 back toward an input edge of mulch plug 1000. This flow of second clipping material is depicted as recirculation via blade (inside wing) 1054 and the arrow associated with it. Moreover, recirculation via blade (inside wing) 1054 directs second clipping material over an airlift wing segment 1026. Figure 10A shows a bottom perspective view 1000A of mulch plug 1000 with an arrow defining upper flow path 1034A and separate arrows showing lower flow path 1032A from the bottom perspective view. Bottom perspective view 1000A shows upper flow path 1034A as intersecting lift blade 1025 inside airlift wing segment 1026 of lift blade 1025.

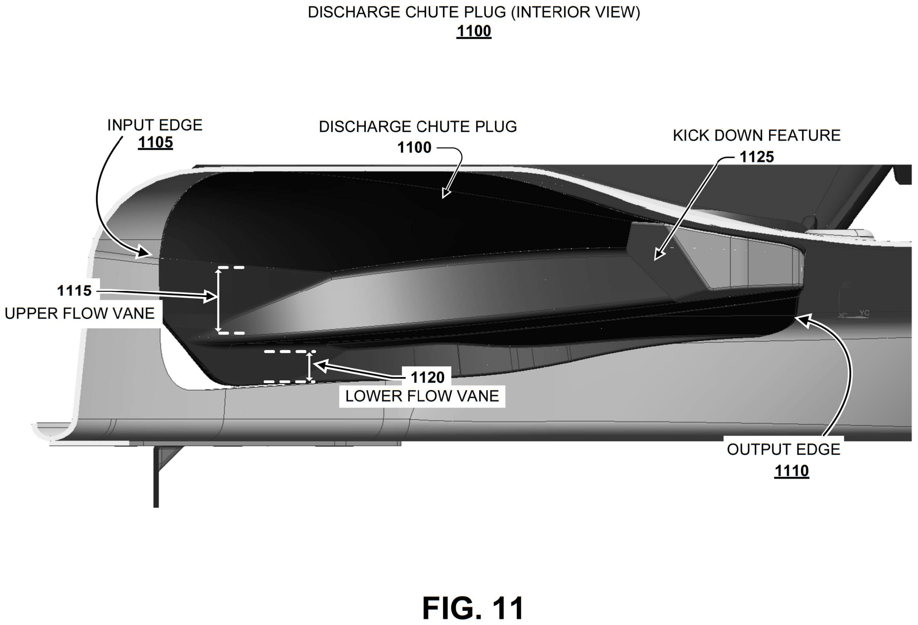

Figure 11 depicts a diagram of an example discharge chute plug 1100 in still further embodiments of the present disclosure. Discharge chute plug 1100 depicts an interior surface as would be observed within an interior of a mow deck of a mowing device. Discharge chute plug 1100 defines an input edge 1105 and an output edge 1110, and further defines an upper flow vane 1115 and lower flow vane 1120 as shown.

In various embodiments of the present disclosure, discharge chute plug 1100 can also include a kickdown feature 1125. Kickdown feature 1125 can comprise a bump, divot, block, wedge, or other structure configured to redirect clipping material moving along an interior surface of upper flow vane 1115 downward toward a surface underlying the mow deck of the mowing device. Kickdown feature 1125 can be located at or near output edge 1110 to intersect the clipping material traveling along upper flow vane 1115 from input edge 1105 to output edge 1110 in response to operation of a blade apparatus within the mow deck.

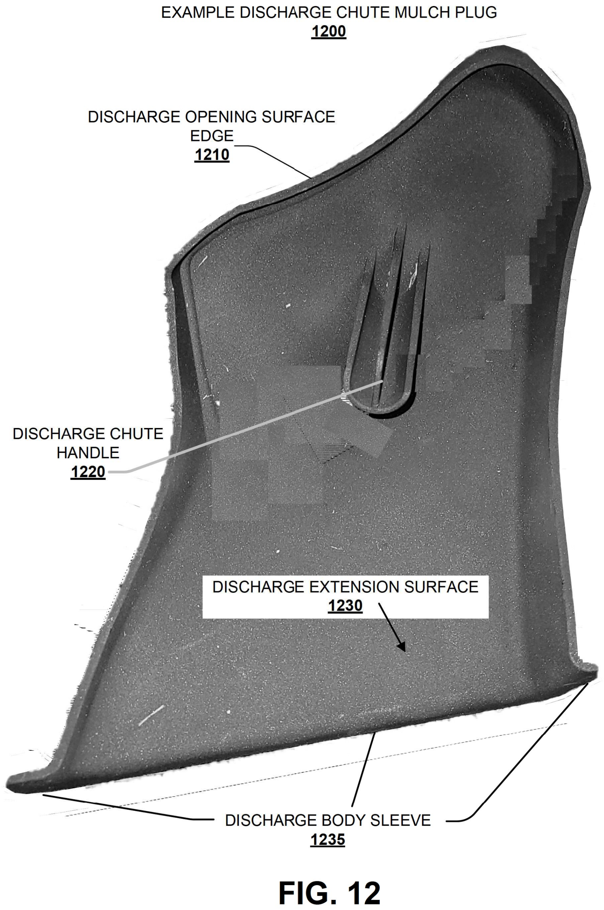

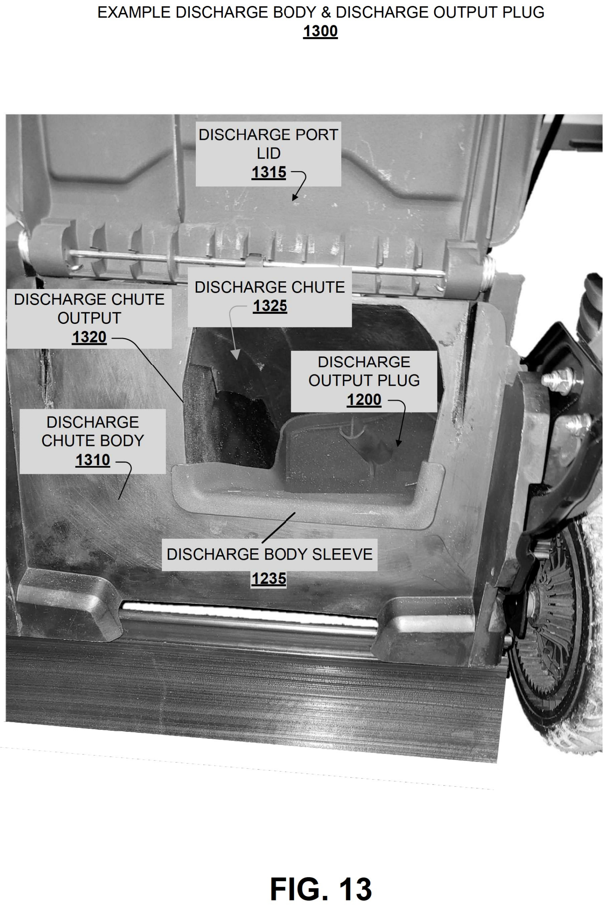

Figure 12 illustrates an example discharge chute mulch plug 1200 from a top-down view. Discharge chute mulch plug 1200 can include a discharge chute handle 1220 to enable an operator to position discharge chute mulch plug 1200 within a discharge chute output 1320 of a discharge chute body 1310 of a walk-behind mowing device, as shown in Figure 13. A discharge opening surface edge 1210 can fit conformally to a perimeter edge of a discharge opening in a mow deck of the walk-behind mowing device (*e.g*., see discharge output 232 of HE mow deck 210 of Figure 2, *supra*). A discharge body sleeve 1235 can define an edge that remains flush to an outside surface of discharge chute body 1310, underneath a discharge port lid 1315. Discharge port lid 1315 can be closed over discharge chute output 1320 and discharge chute mulch plug 1200, and can be lifted off from discharge chute output 1320 and discharge chute 1325 to expose discharge chute mulch plug 1200. Discharge extension surface 1230 can limit a distance within discharge chute output 1320 that discharge chute mulch plug 1200 can extend. Discharge chute handle 1220 can facilitate an operator extracting discharge chute mulch plug 1200 from discharge chute body 1310 as well, to facilitate a bagging operation mode.

Generally, the illustrated embodiments are not provided as strict limitations on how the disclosed aspects can be practiced by one of ordinary skill in the art but are intended to be provided as examples that can be modified, interchanged, added to or subtracted from as would be suitable to one of ordinary skill in the art to accomplish the purposes and objectives described herein. As an example, an arrangement of components depicted in one embodiment can be swapped with components depicted in another embodiment, optionally excluding some components or including other components illustrated in a third embodiment, according to design creativity of one of ordinary skill in the art. For instance, discharge chute body 1310 can be coupled to mower body 110 of Figure 1 and can incorporate discharge chute 1325 and be mechanically coupled to bag 132 of bagging apparatus 130, in suitable aspects of the present disclosure. As a further example, components of disclosed devices can be implemented as connected to other components rather than included within the parent device. Alternatively, the opposite orientation can be implemented within the scope of the disclosure: one component depicted separate from another component can be aggregated as a single component in some embodiments. Additionally, it is noted that one or more disclosed processes can be combined into a single process providing aggregate functionality. Still further, components of disclosed machines /devices /sensors /control units can also interact with one or more other components not specifically described herein but known by those of skill in the art.

In regard to the various functions performed by the above described components, machines, devices, processes and the like, the terms (including a reference to a "means") used to describe such components are intended to correspond, unless otherwise indicated, to any component which performs the specified function of the described component (*e.g*., a functional equivalent), even though not structurally equivalent to the disclosed structure, which performs the function in the herein illustrated exemplary aspects of the embodiments. In this regard, it will also be recognized that the embodiments include a system as well as hardware configured to implement the functions, including mechanical hardware, electronic hardware, and computer-readable medium having computer-executable instructions for performing the acts or events of the various processes.

In addition, while a particular feature may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

In other embodiments, combinations or sub-combinations of the above disclosed embodiments can be advantageously made. Moreover, embodiments described in a particular drawing or group of drawings should not be limited to those illustrations. Rather, any suitable combination or subset of elements from one drawing(s) can be applied to other embodiments in other drawings where suitable to one of ordinary skill in the art to accomplish objectives disclosed herein, known in the art, or reasonably conveyed to one of ordinary skill in the art by way of the context provided in this specification. Where utilized, block diagrams of the disclosed embodiments or flow charts are grouped for ease of understanding. However, it should be understood that combinations of blocks, additions of new blocks, re-arrangement of blocks, and the like are contemplated in alternative embodiments of the present disclosure.

Based on the foregoing it should be understood that the examples and embodiments described herein are for illustrative purposes only and that various modifications or changes falling within the scope of the appended claims will be suggested to persons skilled in the art.

## Claims

1. A mulching plug for a mow deck of a walk-behind power equipment device, comprising:
an interior surface;
an exterior surface that includes an operator insertion or extraction mechanism; and
a surface edge that fits substantially conformal with a perimeter of a discharge opening in a mow deck of a mowing apparatus, wherein the interior surface of the mulching plug is exposed to an interior of the mow deck and defines:
a first flow vane configured to direct material circulating within the interior of the mow deck of the mowing apparatus and received at an input of the first flow vane, along a first flow path within the interior of the mow deck; and
a second flow vane configured to direct second material circulating within the interior of the mow deck of the mowing apparatus and received at an input of the second flow vane, along a second flow path within the interior of the mow deck that is non-contiguous with the first flow path, and wherein:
the second flow path is configured to recirculate at least a portion of the second material around an interior perimeter of the mow deck to return to the input of the first flow vane or the input of the second flow vane, or both.

2. The mulching plug of claim 1, wherein the walk-behind power equipment device comprises a discharge body adjacent to the mow deck, and wherein the discharge body defines:
an intake opening in fluid communication with the discharge opening in the mow deck;
an outtake; and
a discharge chute connecting the intake opening to the outtake; and
wherein the mulch plug further comprises a discharge extension surface extending from an edge of the exterior surface and that fits conformally with a surface of the discharge chute and has a length dimension approximately equal to a depth of the discharge chute through the discharge body.

3. The mulching plug of claim 2, wherein the mulch plug further comprises a sleeve surface at an opposite end of the bottom surface from the exterior surface that seats upon a back surface of the discharge body and prevents the interior surface of the mulching plug from extending through the discharge opening in the mow deck.

4. The mulching plug of any one of the preceding claims, wherein the first flow vane terminates in a kickdown element at an upper surface of the mow deck, and wherein the kickdown element directs a portion of the material circulating within the interior of the mow deck downward from the upper surface of the mow deck toward an apparatus operating within the interior of the mow deck.

5. The mulching plug of any one of the preceding claims, wherein the interior surface further defines an input vane edge that separates the first flow vane from the second flow vane and physically separates the material directed along the first flow path by the first flow vane from the second material directed along the second flow path by the second flow vane.

6. The mulching plug of any one of the preceding claims, wherein the operator insertion or extraction mechanism is an operator handle.

7. The mulching plug of any one of the preceding claims, wherein:
the walk-behind power equipment device includes a blade apparatus that comprises a lift blade having a wing element at an outer portion of the lift blade;
the wing element generates upward air flow within the interior of the mow deck in response to operation of the blade apparatus within the mow deck; and
wherein the first flow path directs the first material inward within the interior of the mow deck and away from a perimeter of the mow deck.

8. The mulching plug of claim 7, wherein an approximate center of the first flow path intersects the wing element of the lift blade; or
wherein an approximate center of the first flow path intersects the lift blade at a flat portion thereof not having the wing element.

9. A walk-behind power equipment device, comprising:
a mow deck, the mow deck further comprising:
a front portion, a rear portion and a side portion of the mow deck;
a plurality of frame mounts at the rear portion of the mow deck;
a center portion defining an opening through a surface of the mow deck, a support ledge and one or more mounts;
a discharge opening defining a second opening through the surface of the mow deck near a perimeter of the mow deck and between the rear portion and the side portion;
a frame and a discharge body secured to the mow deck at least in part by way of the plurality of frame mounts at the rear portion of the mow deck, wherein the discharge body defines a discharge body input fluidly coupled to the discharge opening through the surface of the mow deck;
an electric motor supported at the support ledge of the center portion of the mow deck and powering a blade apparatus, wherein the electric motor and blade apparatus are secured to the one or more mounts and the blade apparatus includes a lift blade rotatable within an interior of the mow deck; and
a removable mulch plug according to any one of the preceding claims, seated within the discharge body.

10. The walk-behind power equipment device of claim 9, wherein the first flow path recirculates the material about an interior perimeter of the interior of the mow deck leaving the removable mulch plug at an exit edge thereof and directing the material toward an input edge thereof.

11. The walk-behind power equipment device of claim 10, wherein the second flow path directs the second material away from a perimeter of the mow deck and downward toward a surface underlying the walk-behind power equipment device.

12. The walk-behind power equipment device of claim 11, wherein the second flow path further directs at least a portion of the second material inward toward a center of the mow deck and overlying a lift blade of the walk-behind power equipment device.

13. The walk-behind power equipment device of claim 12, wherein the lift blade has a length extending from a tip of the lift blade to a center of rotation of the lift blade, and comprises an airlift portion that extends from approximately the tip of the lift blade to about one half to about one fifth the length of the lift blade.

14. The walk-behind power equipment device of claim 13, wherein the second flow path directs at least the portion of the second material over the airlift portion of the lift blade; or wherein the second flow path directs at least the portion of the second material between the airlift portion and the center of rotation of the lift blade.

15. The walk-behind power equipment device of any one of claims 9 to 14, wherein a vertical distance between a cutting edge of an upper blade of the blade apparatus and a lower edge of the first flow vane near an input edge of the removable mulch plug is between about 0.375 inches (0.953 cm) and about 1.5 inches (3.8 cm); and/or
wherein a horizontal distance between an end of an upper blade of the blade apparatus and the second flow vane near an input edge of the removable mulch plug is between about 0.15 inches (0.38 cm) and about 0.5 inches (1.27 cm); and/or
wherein the first flow vane has a vertical height between about 1.0 inches (2.54 cm) and about 2.25 inches (5.72 cm) at an input edge of the removable mulch plug between a lower edge of the first flow vane and an upper edge of the first flow vane.
